# EUROPEAN PATENT APPLICATION

(11) **EP 3 720 159 A1**
(43) Date of publication of application: **07.10.2020**
(21) Application number: 19166796.3
(22) Date of filing: 02.04.2019
(51) Int. Cl.: H04W 4/44, G08C 23/04, H04B 10/116, H04W 4/80

(54) **WIRELESS DATA TRANSPORTATION SYSTEM**

(71) Applicant: Siemens Aktiengesellschaft, 80333 München (DE)
(72) Inventor: Michailow, Nicola, 81825 München (DE)

(57) **Abstract**

The invention specifies a data transportation system (5), comprising:
- At least one data source node (1),
- at least one data sink node (3),
- at least one data transportation node (2) arranged to transport data from the data source node (1) to the data sink node (3) and/or to another data transportation node,
whereas the data is exchanged between the data source node (1), the data sink node (3), and/or the data transportation node (2) using at least one wireless interface using wireless short-range communication at a frequency of 20 GHz 3 THz and/or free space optical data transmission.

The invention further specifies a method for operating a data transportation system (5).

## Description

### Field of the Invention

The present invention relates to a data transportation system and a method for operating a data transportation system.

### Background of the Invention

Wireless transport of possibly large amounts of data (e.g., sensor data, backup data, etc.) from a data source (e.g. a sensor, camera, radio receiver) to a data sink (e.g., compute cluster, backup storage) is currently executed under constrained (limited) communication resources.

Wireless communication is used where wired communication is not feasible (e.g., due to cost, distance, mobility, etc.). Both wired and wireless communication have limited resources. Data is typically transported wirelessly by using technologies like WLAN, LTE, Bluetooth, etc. directly from data source to data sink, consuming respective limited time-frequency resources.

### Summary of the Invention

It is an object of the invention to provide an alternative to the state of the art.

Advantageous embodiments are provided in the dependent claims. Further features, application possibilities, and advantages of the invention result from the following description.

According to the invention the objective is accomplished by utilising short-range communication at a frequency of 20 GHz - 3 THz or visible light communication to re-use wireless/ frequency resources efficiently.

The invention claims a data transportation system, comprising:
- At least one data source node,
- at least one data sink node,
- at least one data transportation node arranged to transport data from the data source node to the data sink node and/or to another data transportation node,
whereas the data is exchanged between the data source node, the data sink node, and/or the data transportation node using at least one wireless interface using wireless short-range communication at a frequency of 20 GHz - 3 THz and/or free space optical data transmission.

"Short-range" in the context of this invention means short-range in dependence of the frequency and the application.

In general, nodes according to the invention (data source node, data sink node, data transportation node) are devices or data points on a larger network. Devices such as a personal computer, cell phone, or printer are nodes.

The invention has the advantage that short-range communication (e.g., mmWave at a frequency of 20 GHz - 3 THz) or visible light communication (different optical devices, e.g. laser) is utilised for efficient spatial re-use of communication resources (time, frequency).

The data transport node is designed to transport, to carry, and/ or to drive data from the data source node to the data sink node.

The data source node, the data sink node, and/or the data transportation node can have multiple wireless interface of the same type or multiple of different types.

The data transport from a data source node to a data sink node by means of a data transport node which physically transports a data storage can be described by the following steps:
- Data is loaded (copied) from the storage/buffer of a data source node to the storage/buffer of a data transport node using a wireless interface.
- The data transport node physically transports ("carries", "drives") from the proximity of data source node to the proximity of data sink node.
- Data is unloaded (copied) from the storage/buffer of said data transport node to the storage/buffer of the data sink node using the same or a different wireless interface.

Data can be also transferred among different data transport nodes.

According to a further embodiment the data source node, the data sink node, and/or the data transportation node comprise a temporary buffer.

According to a further embodiment the data source node, the data sink node, and/or the data transportation node comprise an internal storage unit and/or are connected to an external storage unit.

According to a further embodiment the data source node, the data sink node, and/or the data transportation node comprise an internal computational unit and/ or are connected to an external computational unit. The computational unit can be a CPU, GPU, ASIC, FPGA, a data center / server farm or a cluster of CPUs, GPUs, ASICs, FPGAs, etc.

According to a further embodiment the data source node comprises a sensor and/ or is connected to an external sensor. According to a further embodiment the data sink node comprises an actor and/ or is connected to an external actor.

Summarizing the last paragraphs, the nodes (data source node, data sink node, data transportation node) comprise components as follows.

The data source node:
- Needs to have a wireless interface (can have multiple of same type or multiple of different types)
- Can have a temporary buffer
- Can have or be connected to a storage
- Can have or be connected to some sensor
- Can have or be connected to some computational unit

The data sink node:
- Needs to have a wireless interface (can have multiple of same type or multiple of different types)
- Can have a temporary buffer
- Can have or be connected to computational unit (CPU, GPU, ASIC, FPGA, etc.)
- Can have or be connected to a storage
- Can have or be connected to some actor

The data transport node:
- Needs to have a wireless interface
- Can have a temporary buffer
- Can have or be connected to some storage
- Can have or be connected to some computational unit

Further, the functionalities of source and sink nodes can be combined into a single node. The functionalities of source and transport node can be combined into a single node, too. The functionalities of sink and transport node can be combined into a single node, too.

Each type of node (data source node, data sink node, data transportation node, or a combination of any two of those) can be either mobile or immobile. Mobile nodes can either be controlled via a centralized unit (e.g. fleet manager) or have some on-board intelligence that decides which path to take from source node to sink node and how many intermediate stops should be taken.

Data can be stored and/or transferred either encrypted or un-encrypted.

According to a further embodiment the data transportation node is part of an autonomous vehicle. The autonomous vehicle can be guided by a centralized unit, e.g., automated guided vehicle (AGV), drone, driverless train, satellite, person. Further, a non-autonomous vehicle, which is guided by a person/driver (train, car, fork-lift truck, airplane, etc.) is possible as data transportation node.

Properties of said wireless interface are summarized in the following:
- The wireless interface can have directional properties (analog/digital beamforming, special antenna),
- the wireless interface can utilise short-range communication (e.g., mmWave at a frequency of 20 GHz 3 THz) in order to re-use wireless/frequency resources efficiently,
- the wireless interface can be optical (visible light communication, e.g. laser),
- the wireless interface should allow high throughput (gigabit-per-second, terabit-per-second),
- the wireless interface can utilize unidirectional or bidirectional communication for loading/ unloading data to/from data transport node,
- the data source node, data sink node and/ or data transportation node can have multiple wireless interfaces of the same or of different types for data loading and unloading,
- the data transport node can have additional wireless interfaces, e.g., WLAN, not for data loading/unloading but for maintenance and control tasks that would be necessary for autonomous driving of an automated guided vehicle (AGV) or flying a drone.
- the data transport node can have a single wireless interface that is used for both, loading/unloading the payload data and maintenance/control.

The present invention further claims a method for operating a data transportation system according to the invention. The Method is characterized by:
- transmitting/ loading of data from a data source node to a data transportation node,
- transporting the data by the data transportation node (2), and
- transmitting/ unloading of data from the data transportation node to a second data transportation node or
- transmitting/ unloading of data from the data transportation node to a data sink node
whereas the transmitting of data between the nodes (data source node, data sink node and data transportation node) use wireless short-range communication at a frequency of 20 GHz - 3 THz and/or free space optical data transmission.

The main advantages of the invention are:
- Conserve scarce wireless resources (time, frequency) for time/QoS-critical communication by using a short-range wireless interface to load/unload non-critical data to a storage and by transporting said storage physically from source to sink.
- Effectively, the overall system throughput can be high by using large physical storage on the data transport node. (The trade-off that needs to be made is that the latency can be very high using the inventive method).

The main technical features of the invention are:
- Use of a possibly autonomous data transport node that stores and physically transports data from a data source node to a data sink node,
- use short range and high throughput wireless interface(s) to load/unload data to/from the data transport node,
- a possible autonomous node can have some intelligence (on-board or centralized) that plans which path to take from the data source node to the data sink node (incl. intermediate stops or the use of further data transportation nodes),
- in case of satellites, source and sink might be in constant movement.

Applications of the invention are:
- Store backups of large amounts of data in a centralized location (e.g., videos, logs, training data for machine learning algorithms, environment data)
- collect data in a centralized location for further processing (e.g., distributed collection of training data which is processed by a centralized machine learning algorithm in a compute cluster; distributed collection and centralized processing of image data for optical inspection during production/quality control).
- whenever large amounts of data need to be transported from one place to another and latency is not an issue, without consuming valuable radio resources (spectrum!),
- transport and logistics of large amounts of data will be increasingly important with the rise of artificial intelligence (i.e., data driven deep learning),
- optical inspection/quality control: Collect image data during production and process it later in a data center,
- training data collection for machine learning algorithms: Collect data in a factory (e.g., radio link quality) with AGVs that are driving around, and
- in the bigger picture, this could be also applicable to trains, ships, etc.

Further benefits and advantages of the present invention will become apparent after a careful reading of the detailed description with appropriate reference to the accompanying drawings.

### Brief Description of the Drawings

- Fig. 1: shows a data transportation system and
- Fig. 2: shows a flow diagram of the data transport.

### Detailed Description of the Invention

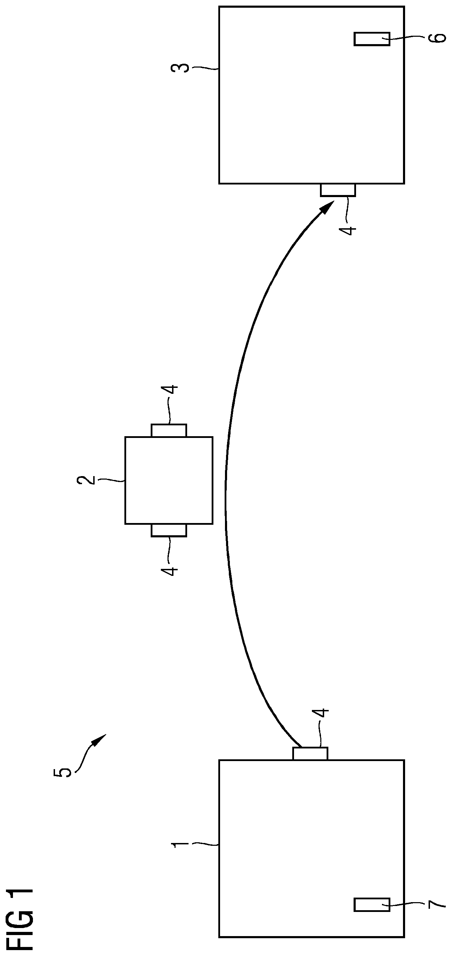

**Fig. 1** shows a data transportation system 5. A data transport node 2 is designed to transport, to carry, and/ or to drive data from the data source node 1 to the data sink node 2.

The data source node 1, the data sink node 3, and/or the data transportation node 2 can have multiple wireless interface 4 of the same type or multiple of different types.

The data source node 1 comprises a sensor 7. As an alternative the is the data source node 1 is connected to an external sensor. The data sink node 3 comprises an actor 6. As an alternative the is the data sink node 3 is are connected to an external actor.

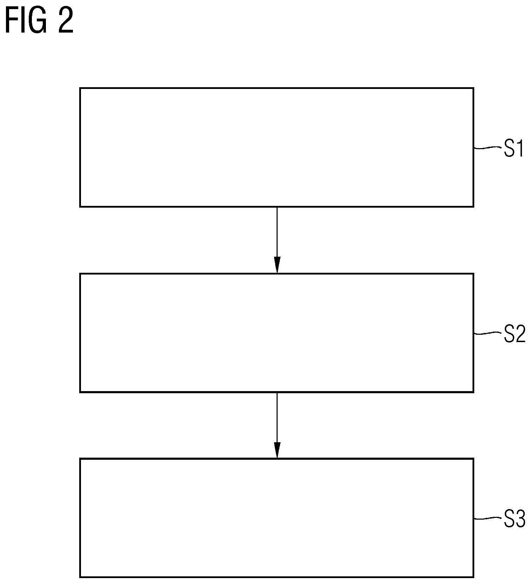

The data transport from a data source node 1 to a data sink node 3 by means of a data transport node 2 which physically transports a data storage can be described as shown in **Fig. 2** by the following steps:
- Data loading S1: Data is loaded (copied) from the storage/buffer of a data source node 1 (shown in Fig. 1) to the storage/buffer of a data transport node 2 (shown in Fig. 1) using a wireless interface.
- Data transporting S2: The data transport node 2 physically transports ("carries", "drives") from the proximity of data source node to the proximity of data sink node.
- Data unloading S3: Data is unloaded (copied) from the storage/buffer of said data transport node 2 to the storage/buffer of the data sink node 3 (shown in Fig. 1) using the same or a different wireless interface 4 (shown in Fig. 1).

Data can be also transferred among different data transport nodes 2. For the data exchange between the nodes (data source node 1, data sink node 3, data transportation node 2) short-range communication (e.g., mmWave at a frequency of 20 GHz - 3 THz) or visible light communication (different optical devices, e.g. laser) can be utilised to re-use wireless/ frequency resources efficiently.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Data transportation system (5), **comprising:**
- At least one data source node (1),
- at least one data sink node (3),
- at least one data transportation node (2) arranged to transport data from the data source node (1) to the data sink node (3) and/or to another data transportation node,
**whereas** the data is exchanged between the data source node (1), the data sink node (3), and/or the data transportation node (2) using at least one wireless interface using wireless short-range communication at a frequency of 20 GHz - 3 THz and/or free space optical data transmission.

2. System according to claim 1,
**whereas** the data source node (1), the data sink node (3), and/or the data transportation node (2) comprise a temporary buffer.

3. System according to one of the previous claims,
**whereas** the data source node (1), the data sink node (3), and/or the data transportation node (2) comprise an internal storage unit and/or are connected to an external storage unit.

4. System according to one of the previous claims,
**whereas** the data source node (1), the data sink node (3), and/or the data transportation node (2) comprise an internal computational unit and/ or are connected to an external computational unit.

5. System according to one of the previous claims,
**whereas** the data source node (1) comprises a sensor and/ or is connected to an external sensor (7).

6. System according to one of the previous claims,
**whereas** the data sink (3) node comprises an actor and/ or is connected to an external actor (6).

7. System according to one of the previous claims,
**whereas** the data transportation node (2) is part of an autonomous vehicle.

8. Method for operating a data transportation system (5) according to one of the previous claims, **characterized by:**
- transmitting of data (S1) from a data source node (1) to a data transportation node (2),
- transporting the data (S2) by the data transportation node (2), and
- transmitting of data (S3) from the data transportation node (2) to a second data transportation node or
- transmitting of data (S3) from the data transportation node (2) to a data sink node (3)
**whereas** the transmitting of data between the nodes (1, 2, 3) use wireless short-range communication at a frequency of 20 GHz - 3 THz and/or free space optical data transmission.
